# EUROPÄISCHE PATENTSCHRIFT

(11) **EP 1 003 996 B1**
(45) Veröffentlichungstag und Bekanntmachung des Hinweises auf die Patenterteilung: **14.11.2001**
(21) Anmeldenummer: 97934412.4
(22) Anmeldetag: 20.08.1997
(51) Int. Cl.: F23N 1/02, F24H 8/00, F24H 1/28, F23D 14/18

(54) **KONDENSATIONSGASHEIZKESSEL**
HEATING BOILER USING CONDENSING GAS
CHAUDIERE DE CHAUFFAGE AU GAZ A CONDENSATION

(30) Priorität: 04.08.1997 CZ 2472
(43) Veröffentlichungstag der Anmeldung: 31.05.2000
(73) Patentinhaber: Cejka, Zbynek, 370 05 Ceské Budejovice (CZ)
(72) Erfinder: Cejka, Zbynek, 370 05 Ceské Budejovice (CZ)
(74) Vertreter: Jeck, Anton, Dipl.-Ing.
(86) Internationale Anmeldenummer: CZ9700030
(87) Internationale Veröffentlichungsnummer: WO9908049

(56) Entgegenhaltungen:
- EP-A- 0 190 616
- DE-A- 4 316 323
- DE-A- 19 519 897
- US-A- 3 322 179

## Beschreibung

### Das technische Sachgebiet

Die Erfindung betrifft einen Kondensationsgasheizkessel für die Verbrennung der brennbaren Gas-Luft-Gemisch, bestehend aus einem eine Wärmeübertragungsflüssigkeit führendes Gehäuse, aus einer inneren Verbrennungskammer mit einem Brenner für flammenlose Strahlungsverbrennung, aus einem Gas-Regelventil, aus einem primären Wärmeaustauscher für die Erwärmung der Wärmeübertragungsflüssigkeit und aus einem sekundären Wärmeaustauscher für die Verbrennungszuluft-Vorwärmung.

### Der Stand der Technik

Die Gaskessel der obigen Art, in deren inneren Verbrennungskammer die flammenlose Strahlungsverbrennung verläuft, sind in einer ganzen Reihe Ausbauausführungen bekannt. Bereits in der tschechoslowakischen Autorenbescheinigung Nr. 262 101 ist ein Gasheizkessel mit einer mit Aktivmasse-Körperchen ausgefüllten Kammer, auf deren Oberfläche es zum flammenlosen Verbrennung der brennbaren Gas-Luft-Gemisch kommt, wobei der bedeutende Teil der durch die Verbrennung gewonnenen Wärme durch Wärmeausstrahlung an Wärmeübertragungsflächen übertragen wird. Gemäß der tschechoslowakischen Autorenbescheinigung Nr. 269 130 und der veröffentlichten Erfindungsanmeldung Nr. 1544 - 91 ist ferner günstig, die Ausfüllung der Aktivmasse in zwei, bzw. in drei, Körperchen von unterschiedlicher Zusammensetzung, Form und Größe enthaltende Zonen aufzuteilen. Die Körperchen sind in der Regel aus Keramik oder Metall ausgeführt. Ebenfalls ist die Gasheizkesselanordnung bekannt, in dem die Verbrennungskammer mit der Aktivmasse ummäntelt ist, in der der Raum für die strömende Wärmeübertragungsflüssigkeit gebildet ist. Eine solche Anordnung ist auch z.B. in den Beschreibungen zu den tschechoslowakischen Autorenbescheinigungen Nr. 254 622 und Nr. 257 014 angeführt.

Bei den Kondensationsgasheizkesseln können zwecks des Abgasaustrittes für die Wirksamkeitsverbesserung Primäraustauscher für die Erwärmung der wärmeübertragenden Flüssigkeit, bzw. auch Sekundäraustauscher für die Vorwärmung der Verbrennungszuluft zum Brenner wie z.B. bei EP 0 190 616 A beschriebenen Kondensationsgasheizkessel untergebracht werden. Der Kondensationsgasheizkessel nutzt also die latente Abgaswärme aus, die im Primäraustauscher durch Kondensation dieser Abgase bei deren Abkühlung unter den Taupunkt gewonnen wird. In der letzten Zeit sind auch Kondensationsgasheizkessel mit einem Vormischbrenner, der mit einigen gelochten Halbkugelflächen gebildet wird, auf denen es zur flammenlosen Strahlungsverbrennung der brennbaren Gas-Luft-Gemisch kommt. Diese Flächen sind an deren Umfang zur Brennerstützplatte gleichmittig befestigt und sind deshalb unbeweglich. Auch in dieser, z.B. in DE 4 316 323 A beschriebenen Konstruktion ist unter der Brennkammer mit einem hohlen Umfangteil ein Austauscher mit strömender Wärmeübertragungsflüssigkeit untergebracht. Eine andere Ausführung des Kondensationsgasheizkessels mit halbkugelförmigem, flammenlosem Strahlungsbrenner ist in DE 4 428 944 A beschrieben, bzw. sind auch geschweißte, in der Firmenliteratur und den Prospekten der Firma VIESMANN vom 1995 (Kessel unter dem Handelsnamen CONDENSOLA RN-UNIT) beschriebene Ausführungen bekannt.
Ein gemeinsames Merkmal aller beschriebenen Kessel ist die fixe Brennerunterbringung im Hinblick auf die Brennkammer, was eine Zwangseinschränkung der Umfangsuntergrenze deren Leistungsregelung hervorruft. Diese Einschränkung wird durch den minimalen Gasdurchfluß bei der Aufrechthaltung der Gas-Luft-Gemischverbrennung im Brennerbereich gegeben. Einen niedrigeren Gemischdurchfluß kann man nicht einstellen, denn es würde zur erheblichen Gemischdruckreduktion und zur Versetzung des Brennprozesses außerhalb des Brennerbereiches, gegebenenfalls zum Flammenerlöschen kommen. Das Regelverhältnis dieser bekannten Gasheizkessel liegt zwischen max. 1:5 bis 1:10, d.h. daß die absolute Leistungsuntergrenze für die Aufrechthaltung der Kesselfunktion ca. 30% der Höchstleistung beträgt. Diese Grenze scheint in der Praxis als zu hoch zu sein, denn z.B. in den Übergangsjahreszeiten Frühjahr und Herbst wäre notwendig den Kessel bei 10 - 20% dessen Höchstleistung im Gang zu halten. Wenn der Kessel auf höhere Leistung arbeitet, kommt es zur übermäßigen Erwärmung der Wärmeübertragungsflüssigkeit und zur öfteren Ausschaltung und Starten des mit einem Zimmerthermostat eingestellten Kessels. Dies führt im Endeffekt zum erhöhten Gasverbrauch und zur Lebensdauersenkung des Kessels.

Die thermisch angestrengten Bestandteile der bekannten Gasheizkessel wie z.B. die Brennkammer, die Wärmeaustauscher und das Gehäuse werden in den meisten Fällen konstruktionsmäßig als komplizierte Stahlblechschweißstücke gelöst. Für verschiedene Leistungen werden konstruktionsmäßig identische, jedoch größenmäßig abgestufte Kessel aufgestellt. Für die Hersteller bedeutet das, daß er sämtliche Kesselteile in vielen Größen hat, was hohe Ansprüche an Organisation und das große Sortiment an Produktions- und Ersatzteilen anlegt.

Hinsichtlich der Produktion sind geschweißte Kessel verhältnismäßig kompliziert, denn sie verlangen hochwertig durchgeführte Schweißnahten sowohl an langen ebenen Kanten wie auch in den Formendetails.
Für die Produktion einiger teile wird Blech aus legiertem Stahl oder nichteiserne Materialien verwendet, was zum Schweißen von Materialien mit unterschiedlichen Eigenschaften, zur Notwendigkeit von geeigneten Schweißmaterialen- und Bedingungen, zur Materialvorwärmung vor dem Schweißen mit dem folgenden Normalisierungsglühen etc. führt.
Die Gasheizkesselteile werden temperaturmäßig äußerst angestrengt, insbesondere durch Wärmeschläge bei raschen Temperaturschwankungen (von ca. 60 C bis auf 1200 C und zurück), und ebenfalls werden sie chemisch angegriffen, denn die Abgase, die an Stahlteilen kondensieren, feucht, warm und vor allem sauer sind, was auch am legierten Stahl zur schnellen Korrosion führt. Schweißnahtbersten, Durchrostung und folgliche Durchbrennung von Kesselteilen sind also die größten Nachteile der geschweißten Gasheizkesseln.

Um diese Nachteile zu beheben, werden einige Gasheizkesselteile, vor allem die Austauscher, als rippenförmige Gußeisenabgüsse produziert, bei denen es zum Schweißnahtbersten nicht kommen kann, und die auch durch aggressive Abgase nicht so viel gefährdet werden. Die Anwendung von Gußeisenabgüssen trägt jedoch den Nachteil, deren hohen Gewichtes mit sich, was ein immer größeres Hindernis bei der Konstruktion der modernen Gasheizkessel von möglichst kleinen Abmessungen, insbesondere wenn diese Kessel immer häufiger z.B. in der Aufhängeausführung gefordert werden.

In einigen Fällen, wie z.B. beim in der Firmenliteratur (Prospekt) der Firma BUDERUS vom 1997 beschriebenen Kessel GB 112 W, werden Abgüsse aus Leichtmetallgußeisen, wie z.B. Aluminium verwendet, die Gießereifertigung dieser Teile ist jedoch hinsichtlich deren hohen Preises und des Formenpreises ausschließlich für eine Großserienfabrikation geeignet.

### Das Wesen der Erfindung

Die obigen Nachteile beseitigt größtenteils ein Kondensationsgasheizkessel gemäß der Erfindung, der aus einem eine Wärmeübertragungsflüssigkeit führendes Gehäuse, aus einer zylindrischen Innenbrennkammer mit einem mit mindestens drei gelochten konvexen Brennflächen gebildeten Strahlbrenner, aus einem Primärwärmeaustauscher für die Erwärmung der Wärmeübertragungsflüssigkeit und aus einem Sekundärwärmeaustauscher für die Vorwärmung der Brennzuluft besteht.
Dessen Wesen besteht darin, daß die Brennflächen hintereinander an einem Ende eines verschiebbar angeordneten Mittelschaftes befestigt sind, und daß die Räume zwischen den Brennflächen mit Aktivmassekörperchen ausgefüllt sind. Der Mittelschaft geht in das Gehäuse durch ein Loch für eine Gemischzuleitung in die Brennkammer,und mit einer in den im Gemischzuleitungsloch in die Brennkammer angeordneten Diffusorsattel hineinfallenden Diffusorglocke versehen ist.

Der Umfangsteil der Brennflächen ist in der Brennkammer auch verschiebbar angeordnet.

Zur flammenlosen Strahlverbrennung des Gemisches kommt es im Raum zwischen den Brennflächen an den Aktivmassekörperchen. Die Schiebeunterbringung des Mittelschaftes ermöglicht eine Schiebebewegung des ganzen Brenners in der Brennkammer bei gleichzeitiger Bewegung der Diffusorglocke im Diffusorsattel, womit der Durchfluß und der Gemischdruck am Brennkammerzulauf geregelt werden. Die Brennerleistung wird also nicht nur mithilfe des in der Gaszuleitung untergebrachten Gasregelventils, sondern gleichzeitig auch mithilfe des Diffusors mittels der Mittelschaft-Schiebebewegung geregelt. Die schmale Diffusorlücke ermöglicht die Aufrechthaltung von genügendem Druck in der Brennkammer auch bei Mindestdurchfluß der Gemisch, so daß der Brennprozeß auch bei diesem geringen Durchfluß stattfindet, ohne daß es zu dessen Erlöschen oder zur Verbrennungserweiterung außerhalb des Brennerbereiches in Richtung zur Gemischzuleitung kommt. Der größte Vorteil des Kondensationsgasheizkessels gemäß der Erfindung besteht also in der Verschiebung der Untergrenze der Leistungregulation auf die Ebene von 10-15% der Kessel-Höchstleistung, was ein Regelverhältnis 1:20 darstellt. Der Kondensationsgasheizkessel gemäß der Erfindung kann mit der Mindestleistung z.B. in den Übergangsheizperioden arbeiten, ohne daß die Wärmeübertragungsflüssigkeit überhitzt wird, was zum Rückgang der Anlaufzahl und im Endeffekt zum Rückgang des Gasverbrauches führt. In einer günstigen Ausführung ist der Oberteil der Brennkammer mit einer Fersenscheibe mit einem in die Brennkammer hinein ausgerichteten Umfangsbördel und mit dem Loch für die Gemischzuleitung gebildet. Der Mittelschaft ist gleichachsig inmitten einer Röhre für die Gemischzuleitung angeordnet, die außerhalb der Brennkammer mit ihrem inneren Ende an der Fersenscheibe rund um das Loch befestigt ist. Die Fersenscheibe und eine Röhre bilden die Trageelemente des Kessels, denn an die Röhre ist der Brenner angeschlossen, und an die Fersenscheibe liegt von außen dessen Umfangsbördels der Mantel an. Im Fersenscheibenloch ist der Diffusorsattel mit einerverkrümmten Innenfläche befestigt, entlang deren das Formsieb für die Homogenisierung des Gas-Luft-Gemisches angeordnet ist.

In einer günstigen Brennerausführung sind die Brennflächen an deren Umfangsteil an einem Schiebereifen befestigt, der an die Schiebebühne zur Innenseite des Umfangsbördels anliegt, und in deren mittleren Teil sind sie an dem Mittelschaft mittels der radial angeordneten Stützen befestigt,die z.B.die Rutenkonstruktion bilden. Die Verbindung der Brennflächen mit dem Mittelschaft und dem Schiebereifen stellt in dieser Ausführung ein genug festes Ganzes dar, das die Schiebebewegung des ganzen Brenners in der zylindrischen Leitung des Umfangsbördels ermöglicht. Die Größe der Löcher in den Brennflächen und gleichzeitig die Größe der Aktivmassekörperchen in Richtung weg von der Gemischzuleitung sich vergrößern, und mindestens eine Schicht der Aktivmasse aus keramischen Körperchen gebildet ist, die mit einer katalytischen Schicht zwecks Verbesserung des Brennprozesses metallisiert sind. In der günstigen Mittelschaftausführung ist dieser Schaft hohl, und mit keramischer Füllung versehen, in der ein Stromleiter eingelegt ist , der zu einer in der Brennkammer vor dem Brenner angeordneten Zünd- und Ionisierungselektrode durchgeht.
Die Mittelschaftdichtung in der Röhre und gleichzeitig dessen Schiebeeinbettung wird durch einen am äußerem Ende der Röhre befestigten und mit einer Zylindereinfassung , durch die der Mittelschaft durchgeht, versehenen Flansch gelöst. Das äußere Mittelschaftende ist mit einer ersten Feder, einem ersten Anschlagsring, einer ersten Wellendichtung und einer Stützmutter versehen,und ist im Eingriff mit dem mit einer elektronischen Steuereinheit gelenkten Verstellantriebskolben.
Das Gasregelventil ist aus einem Körper mit einer Durchlaufkammer vom Ringdurchmesser gebildet, in der ein drehbarer Regelzylinder senkrecht an deren Längsachse angeordnet ist, auf dessen Oberfläche mindestens eine Formfläche gebildet ist. Beim Drehen des drehbaren Regelzylinders um 90 ändert sich das Durchmesser der Durchlaufkammer durch die Drehung der Formfläche, womit man eine fließende Regelung des Gasdurchflusses vom Minimun aufs Maximum erreicht. Die Formfläche kann von einer Seite, gegebenenfalls' von beiden Seiten des drehbaren Regelzylinders gebildet werden, und deren Durchmesser unterscheiden sich nach der Art des zu verbrennenden Gases und dem Kesselanschlußwert. Der drehbare Regelzylinder ist mit einem Ritzel mit einem Zahnkamm versehen, das mit einer Schiebezugstange verbunden ist. Die Zugstange ist am Körperauslauf auf dieselbe Weise wie der Mittelschaft, d.h. mit einer zweiten Wellendichtung mit einer zweiten Stützmutter abgedichtet, sie ist ebenfalls mit einer zweiten Feder und einem zweiten Anschlagsring versehen, und deren Ende ist im Eingriff mit einem Verstellantriebskolben, der mit einer elektronischen Steuereinheit gelenkt wird. Das Gehäuse ist mit einer Innenwand und einer Außenwand gebildet,deren Zwischenraum ist mit der vom Boden zum Deckel strömenden wärmeübertragenden Flüssigkeit ausgefüllt.
Die Innenwand grenzt die Brennkammer ab und ist mit dem ersten Ringteil des Primärwärmeaustauscher verbunden, der an die Brennkammer angeschlossen und von der Außenwand und dem Gehäuseboden umgeben ist. Die Ringteile und Reife des Primärwärmeaustauschers sind von außen mit der Wärmeübertragungsflüssigkeit umgeben, die mit durch den Innenteil der Ringteile und Reife strömenden heißen Abgasen erwärmt ist, wobei es zur Abkühlung und Kondensation diese Abgase kommt. Zwischen mindestens einem Ringteil und der Außenwand des Gehäuses ist eine Zwischenring-Trennwand mit einem Ausschnitt eingelegt, der den kontinuierlichen Raum für die Wärmeübertragungsflüssigkeit abtrennt und deren indirekte Strömung sicherstellt. Bei Verwendung von mehreren Trennwänden sind die Ausschnitte winkelig versetzt, so daß die Wärmeübertragungsflüssigkeit spiralenförmig an den Ringteilen vorbei strömt. Der Sekundärwärmeaustauscher ist außerhalb des Gehäuses angeordnet und durch einen Rauchfang mit dem Primärwärmeaustauscher verbunden. Der Vorteil der beschriebenen Konstruktionsanordnung besteht in der Möglichkeit einer vertikalen zylindrischen Kesselausführung mit minimalen Außenabmessungen und mit der Möglichkeit dessen Aufhängens an eine Wand oder Aufstellung auf ein bodenstehendes Fundament.
In der letzten günstigen Ausführung ist der Kondensationsgasheizkessel nach der Erfindung mit Preßverbänden gefertigt, die übliche Schweiß- oder Gußkonstruktionen ersetzen. Das Gehäuse, die Ringteile und die Reife des Primärwärmeaustauschers bestehen mindestens aus zwei Blechringteilen,die durch Umgfangsformschlösser, die ineinander passen, verbunden sind. An den ersten Teil liegt ein Stützring mit einem Patrizenformvorsprung an, der in das Formschloß des ersten Teiles hineinpaßt. An den anderen Teil liegt ein Überwurfsring mit einer Matrizenformrille an, in die das Formschloß des zweiten Teiles hineinpaßt. Die Verbindung wird entweder so ausgeführt, daß an den ersten Teil mit dem eingelegten Stützring der andere Teil mit dem aufgesetzten Überwurfsring aufgesetzt wird, oder es wird ein zweiter teil mit dem aufgesetzten Stützring auf den zweiten Teil mit dem eingelegten Überwurfsring aufgesetzt. Die Preßverbände werden mit der Verbindung des ersten und des zweiten Teiles in den Formschlössern abgedichtet, sie sind fest genug, und deren größter Vorteil besteht darin, daß sie nicht korrodieren und bersten, wie es bei den Schweißverbänden oft der Fall ist, und dazu noch ermöglichen sie eine große Dilatation aller thermisch belasteten Teile, denn lediglich die Fersenscheibe ist fix befestigt, und das Gehäuse mit der Brennkammer und dem Primärwärmeaustauscher können in axialer Richtung dilatieren.

Die Hauptvorteile des Kondensationsgasheizkessels gemäß der Erfindung bestehen in der Möglichkeit einer fließenden Leistungregelung bis an die Mindestgrenze, d. h. in der Verbesserung des Regelverhältnisses und die damit zusammenhängenden Gasersparungen und niedrige NOx- Emissionswerte. Die Steuerung des Gasregelventils und des Mittelschaftes mit Verstellantrieben wird hinsichtlich des Anschlusses an den elektronischen Regelkreislauf günstig gelöst. Der Kessel ist kompakt, von kleinen Abmessungen, mit kleinem Gewicht und hoher Lebensdauer ohne korrodierenden und berstenden Schweißnahten, die mit Preßverbänden ersetzt werden.

### Übersicht der Zeichnungsabbildungen

Der Kondensationsgasheizkessel gemäß der Erfindung,wird mithilfe der Zeichnungen näher erklärt, auf denen das Bild 1 eine vertikalen Schnitt durch das Gasheizkesselsystem, das Bild 2 einen Detailschnitt durch den oberen Kesselteil mit dem Brenner, das Bild 3 einen Detailschnitt durch den unteren Kesselteil mit dem Primärwärmeaustauscher, das Bild 4 einen gekröpften Schnitt durch das Gasregelventil, das Bild 5 einen Anglick des drehbaren Leuchtgas - Regelzylinders, das Bild 6 einen Schnitt durch diesen Zylinder, das Bild 7 einen Anglick des drehbaren Erdgas-Regelzylinders mit angeschlossenem radialen Querschnitten, das Bild 8 einen Anblick des drehbaren Regelzylinders für Propan-Butan mit angeschlossenen radialen Querschnitten, das Bild 9 einen vertikalen Schnitt durch den Verband der Ringteile des Gehäuses vor deren Einpressen, das Bild 10 einen Schnitt durch denselben Verband nach dem Einpressen darstellen.

### Ausführungsbeispiel

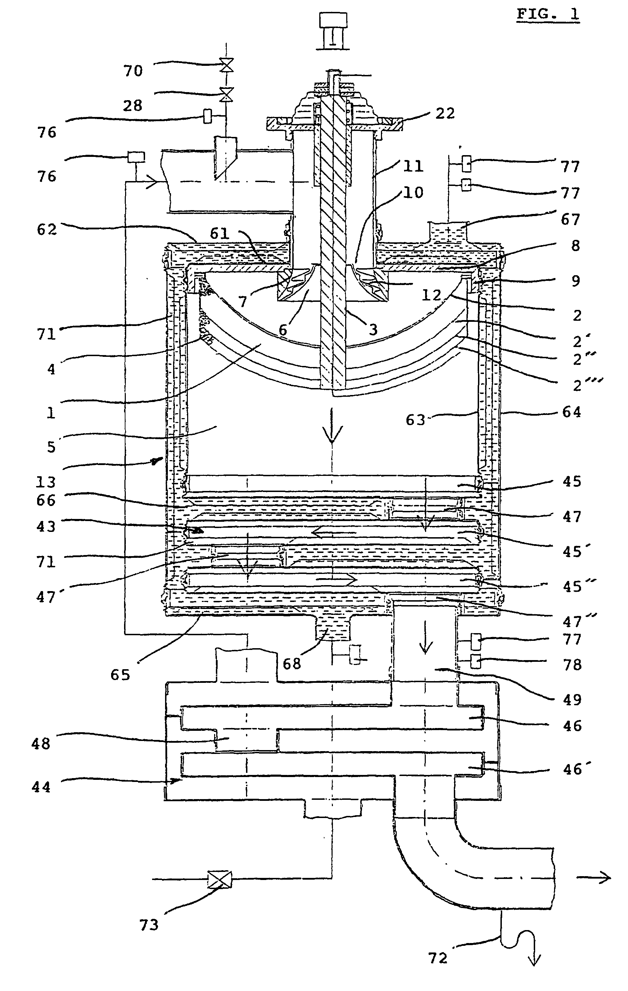

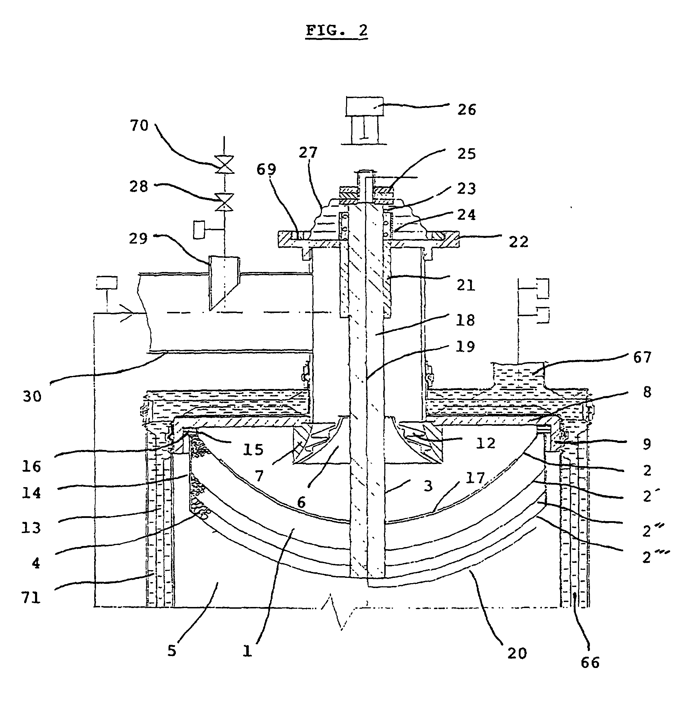

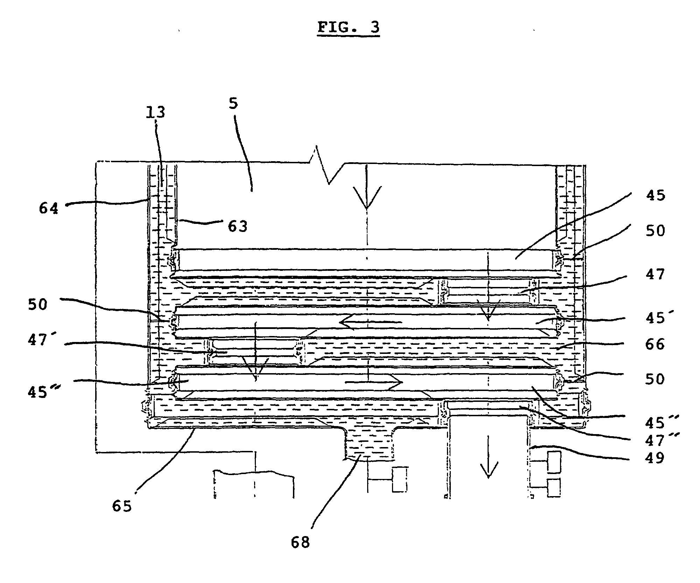

Der Kondensationsgasheizkessel gemäß der Erfindung, abgebildet auf dem Bild 1, dem Bild 2 und dem Bild 3 wird aus rostfreien Stahlblech hergestellt und besteht aus einem Blechgehäuse 13 von zylindrischer Form, das mit der Innenwand 63, der Außenwand 64, dem Innendeckel 61, dem Außendeckel 62 mit dem Austritt 67 der erwärmten Wärmeübertragungsflüssigkeit 66 und einem Boden 65 mit der Zuleitung 68 des abgekühlten Wärmeübertragungsflüssigkeit 66 gebildet ist. Das Gehäuse 13 ist auf einer Fersenscheibe 8 mit einem Umfangsbördel 9 und mit einem Loch 10 aufgesetzt, in dem der Diffusorsattel 7 mit einem Formsieb 12 befestigt ist, und durch das der Mittelschaft 3, versehen mit einer Diffusorglocke 6, durchgeht. An einem Ende des verschiebbar angeordneten Mittelschafts 3 ist in der Brennkammer 5 der Brenner 1 mit vier Brennflächen 2, 2', 2", 2"' angeordnet , die hintereinander befestigt sind und mit gelochten konkaven Blechplanchetten mit runden Löchern gebildet sind, deren Größe sich in Richtung von der Gemischzuleitung vergrößert. Die Räume zwischen den Brennflächen 2, 2', 2", 2"' sind mit Aktivmassekörperchen 4 ausgefüllt, die mit keramischen Kugeln gebildet, sind, deren Durchmesser sich in Richtung von der Gemischzuleitung ebenfalls vergrößert. In der letzten Schicht zwischen den Brennflächen 2", 2"' sind die keramischen Kugel mit einer katalytischen Schicht Aluminiumoxid mit Paladium metallisiert, die zur Verbesserung des flammenlosen Strahlbrennprozesses beiträgt. Die Brennflächen 2, 2', 2", 2"' sind am Umfang an den Schiebereifen 14 angeschweißt, der über eine in der Ausnehmung 15 eingebettete Dichtung 16 an die Innenseite des Umfangsbördels 9 anliegt und sich darin schiebeartig bewegen kann, und im mittleren Teil sind sie an den Mittelschaft 3 durch mit Drathbögen, die in Löcher im Mittelschaft 3 und die Durchpressungen in den Brennflächen 2, 2', 2", 2"' eingeschobenen sind, gebildeten radialen Stützen 17 befestigt. Vor dem Brenner 1 ist eine Zünd- und Ionisierungselektrode 20 mit Stromleitern 19 befestigt, die durch die keramische Füllung 18 im hohlen Mittelschaft 3 durchgehen.

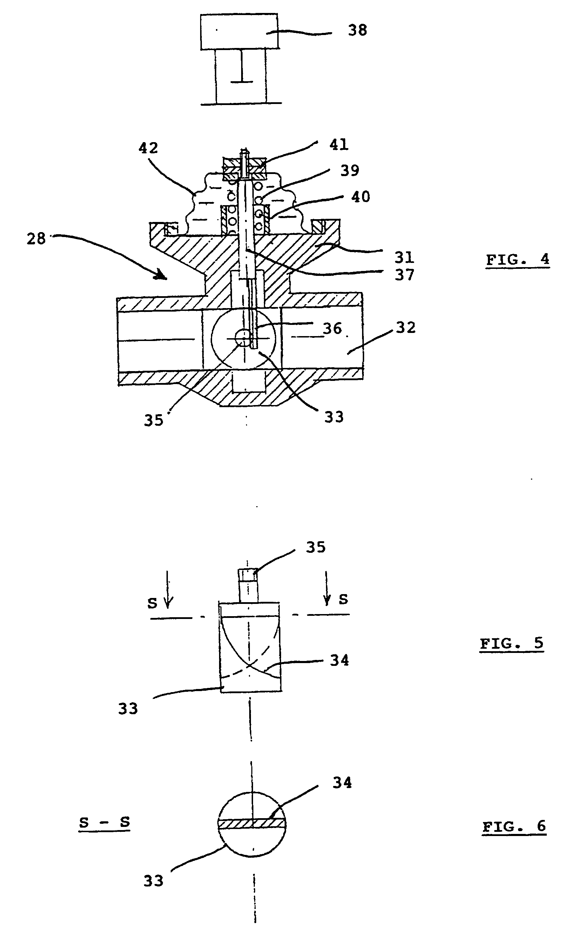

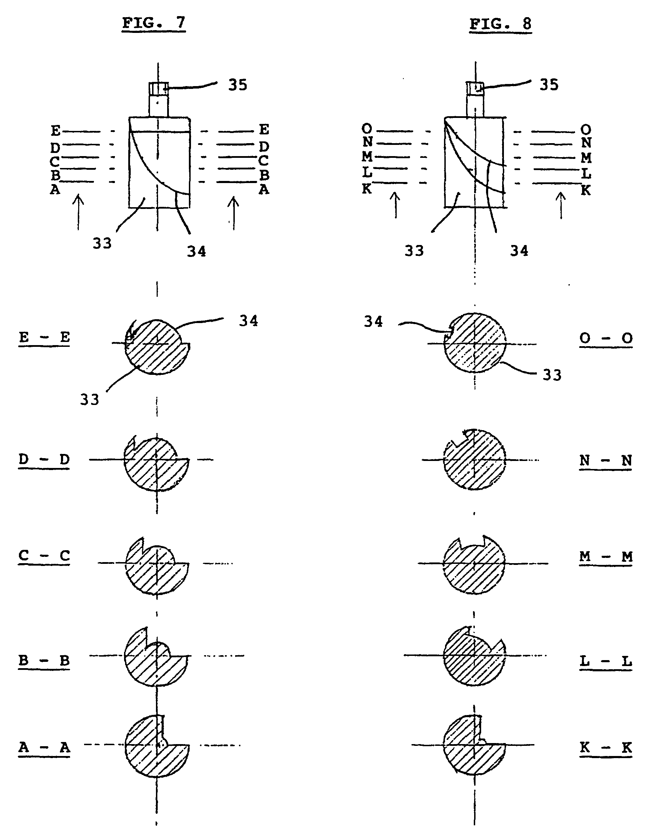

Der Mittelschaft 3 ist gleichachsig inmitten der Röhre 11 untergebracht, die mit ihrem innerem Ende außerhalb der Brennkammer 5 an die Fersenscheibe 8 um das Loch 10 befestigt ist, an deren äußeren Ende ist der Flansch 22 mit einer zylindrischen Einfassung 21 aufgesetzt, in der der Mittelschacht 3 schiebeartig eingefaßt ist. Deren äußeres Ende ist am Austritt aus Flansch 22 mit der ersten Feder 23 und dem ersten Anschlagsring 24, der die Schiebebewegung axial abgrenzt, und ferner mit der ersten Stützmutter 25 versehen, die die erste Wellendichtung 27 sicherstellt, welche am Flansch 22 mit der ersten Innenmutter 69 befestigt ist. Die erste Wellendichtung 27 ist mit Gummidichtringen versehen und stellt einen genügenden Flansch 22 gegen ein Gasentweichen auch bei der Schiebebewegung des Mittelschaftes 3 sicher, der durch den Kolben des ersten mit der elektronischen Steuereinheit gelenkten Verstelltantriebes 26 gedruckt wird. An die Röhre 11 ist die Zuleitung 30 der vorgewärmten Brennluft angeschlossen, in die die Gasleitung 29 mit dem Gasregelventil 28 und mit dem Absperrventil 70 mündet. Gemäß dem Bild 4 ist das Gasregelventil 28 mit dem Körper 31 mit der Durchflußkammer 32 vom ringförmigen Durchmesser gebildet. Vertikal zu deren Achse ist der drehbare Regelzylinder 33 mit Formfläche 34 angeordnet. Auf dem Bild 5 und dem Bild 6 ist ein Querschnittbeispiel der Formfläche 34 für Leuchtgas, auf dem Bild 7 für Erdgas und auf dem Bild 8 für Propan-Butan. Der drehbare Regelzylinder 33 hat ein mit einem Zahnkamm 36 mit Zugstange 37 funktionierendes Ritzel 35. Die Zugstange 37 ist im Körper 31 schiebeartig untergebracht und am Austritt aus dem Körper 31 mit der zweiten Feder 39, dem zweiten Anschlagsring 40, der zweiten Stützmutter 41 und der zweiten Wellendichtung 42 versehen, wobei die Anordnung und Funktion dieser Elemente gleich wie am Austritt des Mittelschaftes 3 aus dem Flansch 22 sind. Die Zugstange 37 wird mit dem Kolben des zweiten Verstellantriebes 38 gedrückt, der ebenfalls mit der elektronischen Steuereinheit gelenkt wird.

An die Innenwand 63 des Gehäuses 13, die die Brennkammer 5 abgrenzt, schließt der Primärwärmeaustauscher 43 an, der aus drei ringförmigen Blechteilen 45, 45', 45", die mit den Reifen 47, 47', 47", verbunden sind, besteht und inmitten des Gehäuses 13 angeordnet ist. Zwischen den Ringteilen 45, 45', 45" sind Zwischenring-Trennwände 50 mit Ausschnitten untergebracht, die winkelig gegeneinander versetzt sind. An der Innenoberfläche der Gehäusewände 13 und des Primärwärmeaustauschers 43 sind durchgepreßte Versteifungen 71 gebildet. Der Sekundärwärmeaustauscher 44 ist außerhalb des Gehäuses 13 untegebracht, er ist mit zwei, mit Zwischenreif 48 verbundenen Blechteilen 46, 46' mit ringförmigem Durchmesser gebildet, und ist mit dem Primärwärmeaustauscher 43 durch einen Rauchfang 49 verbunden.Die kondensierten und abgekühlten Abgase werden am Austritt des Sekundärwärmeaustauscher 44 in einen Überlaufkondensatabgang 72 aufgefangen, während die Außenluft mit dem Ventilator 73 in den Sekundärwärmeaustauscher 44 geblasen wird, wo sie vorgewärmt wird, und folglich wird sie durch die Zuleitung 30 in die Röhre 11 und ferner zum Brenner 1 geführt wird. In der Zuleitung 30 der vorgewärmten Brennluft und in der Gasleitung 29 sind Druckabtaster 76 installiert, im Rauchfang 49, an der Zuleitung 68 und der Ableitung 67 der Wärmeübertragungsflüssigkeit 66 aus dem Gehäuse 13 sind Temperaturabtaster 77 installiert, und im Rauchfang 49 ist ein Abtaster der Sauerstoffkonzentration 78 (die sog. Lambda-Sonde) installiert. Die Abtasterelemente 76, 77, 78 und der Ventilator 73 sind an die elektronische Steuereinheit angeschlossen, die nicht abgebildet ist.

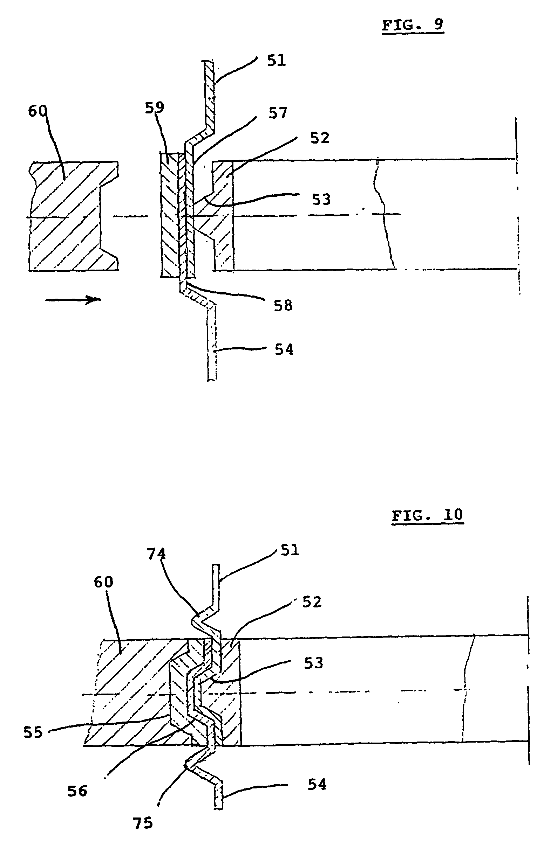

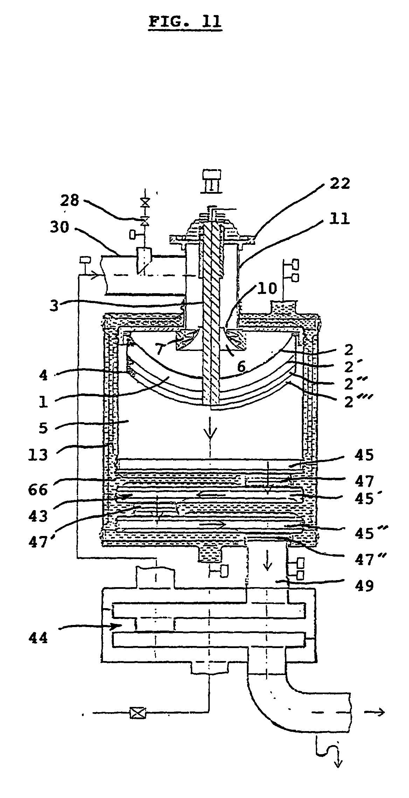

Die Ringteile des Gehäuses 13, der Ringteilen 45, 45', 45" und der Reife 47, 47', 47" sind mit Preßverbänden verbunden, die auf dem Bild 9 und dem Bild 10 dargestellt sind. Der erste Teil 51 und der zweite Teil 54 sind in den Umfangsformschlössern unzerlegbar verbunden, wobei an den ersten Teil 51 der Stützring 52 mit dem Patrizenformvorsprung 53 anliegt, der in das Formschloß des ersten Teiles 51 anliegt, und an den zweiten Teil 54 liegt der Überwurfsring 55 mit der Matrizenformrille 56 an, in die das Formschloß des zweiten Teiles 54 hineinpaßt. Im gegebenen Ausführungsbeispiel ist der Stützring 52 als ein Innenteil angeordnet, und der Überswurfsring 55 als ein Außenteil, die Reihenfolge der verbundenen Teile, des Stützringes 52 und des Überwurfsringes 55 kann man jedoch so ändern, daß der Stützring 52 als ein Außenteil und der Überwurfssring 55 als ein Innenteil wie bei den Reifen 47, 47', 47" angeordnet ist.

Bei der Herstellung des Kessels wird gemäß dem Bild 9 und dem Bild 10 so vorgegangen, daß man zuerst am Ende des ersten Teiles 51 und des zweiten Teiles 54 die zylindrischen Einfassungen 57, 58 vorpreßt. In die zylindrische Einfassung 57 des ersten Teiles 51 wird der Stützring 52 eingelegt, der erste Teil 51 wird in die zylindrische Einfassung 58 des zweiten Teiles 54 eingeschoben, an den man den flachen Ring 59 einsetzt, der folglich gemeinsam mit den zylindrischen Einfassungen 57, 58, dem Ringpreßkiefer 60 mit dem Formschloß gegen den Patrizenformvorsprung 53 des Stützringes 52 einpreßt. Dadurch wird ein Preßverband gebildet, der mit dem Überwurfsring 55 mit der Matrizenformrille 56 gesichert und in den Formschlössern des ersten Teiles 51 und des zweiten Teiles 54 abgedichtet ist. Beim Pressen entstehen an den Verbindungsteilen Umfangsvorsprünge 74, 75, die als Dilatationselemente bei thermischer Belastung und Temperaturänderungen des Gehäuses 13 und sonstigen mit Preßverbänden verbundenen Kesselteile dienen.

Beim Pressen wird von der Verbindung des Innendeckel 61 mit dem Außendeckel 62 des Gehäuses 13 an der Röhre 11 zur Verbindung der Innenwand 63 des Gehäuses 13 mit dem Innendeckel 61 und folglich mit dem ersten Ringteil 45 des Primärwärmeaustauschers 43 vorgegangen. Ferner werden die Reife 47, 47'und die Ringteile 45', 45" kontinuierilich gepreßt, an die die Zwischenring-Trennwände 50 mit dem Ausschnitt so eingesetzt werden, daß die Ausschnitte winkelig gegeneinander versetzt sind, und es wird der Preßverband der Außenwand 64 mit dem Außendeckel 62 und mit dem Boden 65 des Gehäuses 13 vorgenommen. Zum Schluß wird von innen die Verbindung des letzten Ringteiles 45"mit dem Boden 65 eingepreßt, wodurch der letzte Reif 47" für den Rauchfangeinsatz 49 entsteht.

### Die Gewerbliche Anwendbarkeit

Der Kondensationsgasheizkessel gemäß der Erfindung ist für die Beheizung von Wohnhäusern und anderen Objekten, und zwar für sämtliche handelsübliche Heizgasarten anwendbar.

## Patentansprüche

1. Kondensationsgasheizkessel, bestehend aus einem eine Wärmeübertragungsflüssigkeit führendes Gehäuse (13), aus einer zylindrischen Innenbrennkammer mit einem Brenner (1) mit mindestens drei gelochten konvexen Brennflachen (2, 2', 2") für flammenlose Strahlverbrennung, einem Gasregelventil (28) , einem Primärwärmeaustauscher (43) für die Erwärmung der Wärmeübertragungsflüssigkeit und aus einem Sekundärwärmeaustauscher (44) für die Vorwärmung der Brennerzuluft, wobei die Abgase durch den Primär- und den Sekundärwärmaustauscher strömen und dabei kondensieren, **dadurch gekennzeichnet, daß** die Brennflächen (2, 2', 2") des Brenners (1) an einem Ende eines verschiebbar angeordneten Mittelschaftes (3) hintereinander befestigt sind, der in das Gehäuse (13) durch ein Loch (10) für eine Gemischzuleitung in die Brennkammer (5) geht und mit einer Diffusorglocke (6) versehen ist, die in einen im Loch (10) angeordneten Diffusorsattel (7) hineinpaßt, daß der Umfangsteil der Brennflächen (2, 2', 2'') in der Brennkammer (5) verschiebbar angeordnet ist, und daß die Räume zwischen den Brennflächen (2, 2', 2'') mit Aktivmassekörperchen (4) ausgefüllt sind.

2. Kondensationsgasheizkessel gemäß dem Anspruch 1, **dadurch gekennzeichnet, daß** der obere Teil der Brennkammer (5) mit einer Fersenscheibe (8) mit einem Umfangsbördel (9) in Richtung Brennkammer (5) hinein und mit dem Loch (10) für die Gemischzuleitung gebildet ist, daß der Mittelschaft (3) gleichachsig inmitten einer Röhre (11) für die Gemischzuleitung angeordnet ist , die außerhalb der Brennkammer (5) mit ihrem innerem Ende an der Fersenscheibe (8) um das Loch (10) befestigt ist , in dem der Diffusorsattel (7) mit einer verkrümmten Innenfläche befestigt ist, entlang dessen ein Formsieb (12) angeordnet ist, und daß das zylindrisch ausgeformte Gehäuse (13) an der Außenseite des Umfangsbördels (9) der Fersenscheibe (8) anliegt.

3. Kondensationsgasheizkessel gemäß den Ansprüchen 1 und 2, **dadurch gekennzeichnet, daß** die Brennflächen (2, 2', 2") an deren Umfangsteil an einem Schiebereifen (14) befestigt sind , der an der Innenseite des Umfangsbördels (9) anliegt , und in deren mittleren Teil an dem Mittelschaft (3) mit radial angeordneten Stützen (17) befestigt sind, daß die Größe der Löcher in den Brennflächen (2, 2', 2'') genauso wie die Größe der Aktivmassekörperchen (4) in Richtung weg von der Gemischzuleitung sich vergrößern, und mindestens eine Schicht der Aktivmassekörperchen (4 ) aus keramischen, mit katalytischer Schicht metallisierten Körperchen gebildet ist.

4. Kondensationsgasheizkessel gemäß den Ansprüchen 1 und 2, **dadurch gekennzeichnet, daß** der Mittelschaft (3) hohl und mit keramischer Füllung (18) versehen ist, in der ein Stromleiter (19) eingelegt ist , der zu einer Zünd- und Ionisierungselektrode (20) durchgeht, daß der Mittelschaft (3) durch eine zylindrische Einfassung (21) eines Flansches (22) verläuft , der am äußerem Ende der Röhre (11) befestigt ist, daß dieses äußere Ende mit einer ersten Feder (23), einem ersten Anschlagsring (24) und einer ersten Stützmutter (25) versehen ist , und daß der Kolben eines ersten Verstellantriebes (26) gegen das äußere Ende andrückt, wobei zwischen dem Flansch (22) und der ersten Stützmutter (25) eine erste Wellendichtung (27) angeordnet ist.

5. Kondensationsgasheizkessel mindestens gemäß einem der Ansprüche 1 bis 4, **dadurch gekennzeichnet, daß** das Gasregelventil (28) mit einem Körper (31) mit Durchlaufkammer (32) von ringförmigem Durchmesser gebildet wird, in der ein drehbarer Regelzylinder (33) senkrecht an deren Längsachse angeordnet ist, an dessen Oberfläche mindestens eine Formfläche (34) gebildet ist, und der mit einem Ritzel (35) mit einem Zahnkamm (36) versehen ist, an den mittels einer Zugstange (37) der Kolben eines zweiten Verstellantriebes (38) drückt,wobei die Zugstange (37) am Austritt aus dem Körper (31) mit einer zweiten Feder (39), einem zweiten Anschlagsring (40) und einer zweiten Stützmutter (41) versehen ist,und zwischen dem Körper (31) und der zweiten Stützmutter (41) eine zweite Wellendichtung (42) angeordnet ist.

6. Kondensationsgasheizkessel gemäß den Ansprüchen 1 und 2, **dadurch gekennzeichnet, daß** das Gehäuse (13) mit einer Innenwand (63) und einer Außenwand (64) gebildet ist, deren Zwischenraum mit der Wärmeübertragungsflüssigkeit (66) ausgefüllt ist , wobei die Innenwand (63) die Brennkammer (5) abgrenzt, und daß der Primärwärmeaustauscher (43) aus mit Reifen (47, 47', 47") verbundenen Ringteilen (45, 45', 45") besteht, an die Brennkammer (5) anschließt und von der Außenwand (64) und dem Boden (65) des Gehäuses (13) umgeben ist, wobei zwischen mindestens einem Ringteil (45, 45', 45") und der Außenwand (64) eine Zwischenring-Trennwand (50) waagrecht angeordnet ist, und daß der Sekundärwärmeaustauscher (44) außerhalb des Gehäuses (13) angeordnet und mit dem Primärwärmeaustauscher (43) mit einem Rauchfang (49) verbunden ist.

7. Kondensationsgasheizkessel gemäß dem Anspruch 6, **dadurch gekennzeichnet, daß** das Gehäuse (13) und die Ringteile (45, 45', 45") und die Reife (47, 47', 47") des Primärwärmeaustauschers (43) mindestens aus zwei ringförmigen Blechteilen bestehen , die mittels ineinander passenden Formschlösser unzerlegbar verbunden sind, wobei an den ersten Teil (51) ein Stützring (52) mit einem Patrizenformvorsprung (53) anliegt, der in das Formschloß des ersten Teiles (51) hineinpaßt, und an den zweiten Teil (54) ein Überwurfsring (55) mit einer Matrizenformrille (56) anliegt , in die das Formschloß des zweiten Teiles (54) hineinpaßt.

## Claims

1. Gas condensation boiler, comprising a housing (13), conducts a heat-exchange liquid, a cylindrical internal combustion chamber having a burner (1) with at least three perforated convex combustion surfaces (2, 2', 2") for flameless radiation-type combustion, a gas regulating valve (28), a primary heat exchanger (43) for heating the heat-exchange liquid, and a secondary heat exchanger (44) for preheating the burner supply air, the waste gases flowing through the primary and secondary heat exchangers and thereby condensing, **characterised in that** the combustion surfaces (2, 2', 2") of the burner (1) are mounted one behind the other on one end of a displaceably disposed central rod (3), which extends into the housing (13) through an opening (10) for supplying the mixture to the combustion chamber (5) and is provided with a bell-shaped diffuser (6), which fits into a diffuser seat (7) disposed in the opening (10), **in that** the peripheral portion part of the combustion surfaces (2, 2', 2") is displaceably disposed in the combustion chamber (5), and **in that** the spaces between the combustion surfaces (2, 2', 2") are filled with active substance particles (4).

2. Gas condensation boiler according to claim 1, **characterised in that** the upper portion of the combustion chamber (5) is formed by a foot plate (8) having a peripheral rim (9) directed towards the combustion chamber (5) and having the opening (10) for supplying the mixture, **in that** the central rod (3) is disposed coaxially in the middle of a tube (11) for supplying the mixture, which tube is mounted externally of the combustion chamber (5) with its inner end on the foot plate (8) around the opening (10), in which the diffuser seat (7) is mounted with a curved internal face, a shaped sieve (12) being disposed along said seat, and **in that** the cylindrically shaped housing (13) abuts against the outside of the peripheral rim (9) of the foot plate (8).

3. Gas condensation boiler according to claims 1 and 2, **characterised in that** the combustion surfaces (2, 2', 2") are mounted at their circumferential part on a slidable hoop (14), which abuts against the inside of the peripheral rim (9), and they are mounted in their central part on the central rod (3) by means of radially disposed supports (17), **in that** the size of the openings in the combustion surfaces (2, 2', 2") increases, exactly like the size of the active substance particles (4), in the opposite direction to the supply of mixture, and at least one layer of the active substance particles (4) is formed from ceramic particles metallised with a catalytic layer.

4. Gas condensation boiler according to claims 1 and 2, **characterised in that** the central rod (3) is hollow and filled with ceramic material (18), in which is inserted a current conductor (19), which passes to an ignition and ionising electrode (20), **in that** the central rod (3) extends through a cylindrical holder (21) of a flange (22) which is mounted on the outer end of the tube (11), **in that** this outer end is provided with a first spring (23), a first stop ring (24) and a first supporting nut (25), and **in that** the piston of a first adjustment drive (26) presses against the outer end, a first shaft seal (27) being disposed between the flange (22) and the first supporting nut (25).

5. Gas condensation boiler according to at least one of claims 1 to 4, **characterised in that** the gas regulating valve (28) is formed by a body (31) having a through-flow chamber (32) of annular diameter, in which chamber there is vertically disposed a rotatable regulating cylinder (33) on the longitudinal axis of said chamber, at least one shaped face (34) being formed on the surface of said cylinder, and which cylinder is provided with a pinion (35), having a toothed rack (36), the piston of a second adjustment drive (38) pressing against said rack by means of a push-rod (37), the push-rod (37) being provided, at the outlet from the body (31), with a second spring (39), a second stop ring (40) and a second supporting nut (41), and a second shaft seal (42) being disposed between the body (31) and the second supporting nut (41).

6. Gas condensation boiler according to claims 1 and 2, **characterised in that** the housing (13) is formed by an internal wall (63) and an external wall (64), the intermediate space between said walls being filled with the heat-exchange liquid (66), the internal wall (63) defining the combustion chamber (5), and **in that** the primary heat exchanger (43) comprises annular portions (45, 45', 45"), which are connected to hoops (47 ,47', 47") which communicate with the combustion chamber (5), and it is surrounded by the external wall (64) and the base (65) of the housing (13), an intermediate ring dividing wall (50) being disposed horizontally between at least one annular portion (45, 45', 45") and the external wall (64), and **in that** the secondary heat exchanger (44) is disposed externally of the housing (13) and connected to the primary heat exchanger (43) by a flue (49).

7. Gas condensation boiler according to claim 6, **characterised in that** the housing (13) and the annular portions (45, 45', 45") and the hoop (47, 47', 47") of the primary heat exchanger (43) are formed from at least two annular pieces of sheet metal, which are indivisibly connected by means of shaped locks which fit into one another, a supporting ring (52) abutting against the first piece (51) with a male die projection (53) which fits into the shaped lock of the first piece (51), and a collar ring (55) abutting against the second piece (54) with a female die groove (56), into which the shaped lock of the second piece (54) fits.

## Revendications

1. Chaudière à gaz à condensation se composant d'un boîtier (13) renfermant un liquide caloporteur, d'une chambre de combustion interne cylindrique avec un brûleur (1) avec au moins trois surfaces de combustion ajourées convexes (2, 2', 2") pour une combustion en faisceau sans flamme, d'une soupape de régulation du gaz (28), d'un échangeur de chaleur primaire (43) pour le réchauffage du liquide caloporteur et d'un échangeur de chaleur secondaire (44) pour le préchauffage de l'arrivée d'air pour le brûleur, les gaz d'échappement traversant l'échangeur de chaleur primaire et l'échangeur de chaleur secondaire en se condensant, **caractérisée en ce que** les surfaces de combustion (2, 2', 2") du brûleur (1) sont fixées l'une derrière l'autre à l'une des extrémités d'une tige centrale (3) disposée de manière coulissante, qui pénètre dans la chambre de combustion (5) du boîtier (13) par un trou (10) pour une conduite d'arrivée de mélange et qui est munie d'une cloche de diffusion (6) adaptée dans un porte-diffuseur (7) disposé dans le trou (10), **en ce que** la partie périphérique des surfaces de combustion (2, 2', 2") est disposée de manière coulissante dans la chambre de combustion (5) et **en ce que** les espaces entre les surfaces de combustion (2, 2', 2") sont remplis de petits éléments de masse active (4).

2. Chaudière à gaz à condensation selon la revendication 1, **caractérisée en ce que** la partie supérieure de la chambre de combustion (5) est constituée d'une plaque à talon (8) munie d'une collerette circulaire (9) dirigée vers la chambre de combustion (5) et du trou (10) pour la conduite d'arrivée du mélange, **en ce que** la tige centrale (3) est disposée au centre d'un tube (11) pour l'arrivée du mélange dans l'axe de celui-ci, ce tube étant fixé à l'extérieur de la chambre de combustion (5) avec son extrémité intérieure sur la plaque à talon (8) autour du trou (10) dans lequel est fixé le porte-diffuseur (7) avec sa surface intérieure courbe, le long de laquelle est disposé un tamis préformé (12) et **en ce que** le boîtier de forme cylindrique (13) repose sur le côté extérieur de la collerette circulaire (9) de la plaque à talon (8).

3. Chaudière à gaz à condensation selon les revendications 1 et 2, **caractérisée en ce que** les surfaces de combustion (2, 2', 2") sont fixées sur leur pourtour sur un anneau coulissant (14), qui s'appuie sur le côté intérieur de la collerette circulaire (9), et sur leur partie centrale à la tige centrale (3) au moyen d'appuis (17) placés en direction radiale et **en ce que** la taille des trous dans les surfaces de combustion (2, 2', 2") ainsi que la taille des petits éléments de masse active (4) augmentent en s'éloignant de la conduite d'arrivée de mélange et qu'au moins une couche de petits éléments de masse active (4) est composée de petits éléments en céramique métallisés par une couche catalytique.

4. Chaudière à gaz à condensation selon les revendications 1 et 2, **caractérisée en ce que** la tige centrale (3) est creuse et est munie d'un remplissage en céramique (18) dans lequel est placé un conducteur (19) qui le traverse pour former une électrode d'allumage et d'ionisation (20), **en ce que** la tige centrale (3) passe à travers un cadre cylindrique (21) d'une bride (22) qui est fixée à l'extrémité extérieure du tube (11), **en ce que** cette extrémité extérieure est munie d'un premier ressort (23), d'une première bague de butée (24) et d'un premier écrou d'appui (25) et **en ce que** le piston d'un premier mécanisme d'ajustement (26) appuie contre l'extrémité extérieure, un premier joint d'arbre (27) étant disposé entre la bride (22) et le premier écrou d'appui (25).

5. Chaudière à gaz à condensation au moins selon l'une des revendications 1 à 4, **caractérisée en ce que** la soupape de régulation du gaz (28) est constituée d'un corps (31) avec une chambre de passage (32) ayant un diamètre circulaire, dans laquelle est disposé perpendiculairement à son axe longitudinal un cylindre de régulation rotatif (33) à la surface duquel est formée au moins une surface profilée (34) et qui est muni d'un pignon (35) avec une crémaillère (36) sur laquelle appuie le piston d'un deuxième mécanisme d'ajustement (38) par l'intermédiaire d'une barre de traction (37), la barre de traction (37) étant munie à sa sortie du corps (31) d'un deuxième ressort (39), d'une deuxième bague de butée (40) et d'un deuxième écrou d'appui (41), un deuxième joint d'arbre (42) étant disposé entre le corps (31) et le deuxième écrou d'appui (41).

6. Chaudière à gaz à condensation selon les revendications 1 et 2, **caractérisée en ce que** le boîtier (13) est formé d'une paroi intérieure (63) et d'une paroi extérieure (64) qui forment entre elles un interstice qui contient le liquide caloporteur (66), la paroi intérieure (63) délimitant la chambre de combustion (5), **en ce que** l'échangeur de chaleur primaire (43) se compose de pièces en forme de bagues (45, 45', 45") reliées par des anneaux (47, 47', 47"), est attenant à la chambre de combustion (5) et est entouré de la paroi extérieure (64) et du fond (65) du boîtier (13), une paroi de séparation de bagues intermédiaires (50) étant disposée horizontalement entre au moins une pièce en forme de bague (45, 45', 45") et la paroi extérieure (64) et **en ce que** l'échangeur de chaleur secondaire (44) est disposé en dehors du boîtier (13) et est relié à l'échangeur de chaleur primaire (43) par une cheminée (49).

7. Chaudière à gaz à condensation selon la revendication 6, **caractérisée en ce que** le boîtier (13) et les pièces en forme de bagues (45, 45', 45") ainsi que les anneaux (47, 47', 47") de l'échangeur de chaleur primaire (43) se composent au moins de deux pièces en tôle circulaires qui sont reliées de manière non démontable au moyen de platines profilées s'encastrant l'une dans l'autre, une bague d'appui (52) avec une avancée en forme de poinçon (53), qui s'ajuste dans la platine profilée de la première pièce (51), étant en contact avec la première pièce (51) et une bague d'accouplement (55) avec une gorge en forme de matrice (56), dans laquelle s'ajuste la platine profilée de la deuxième pièce (54), étant en contact avec la deuxième pièce (54).
